# EUROPÄISCHE PATENTSCHRIFT

(11) **EP 0 860 758 B1**
(45) Veröffentlichungstag und Bekanntmachung des Hinweises auf die Patenterteilung: **28.04.2004**
(21) Anmeldenummer: 98102308.8
(22) Anmeldetag: 11.02.1998
(51) Int. Cl.: G05B 19/05

(54) **Einrichtung zur Programmierung einer SPS**
Device of programmation of a programmable controller
Dispositif de programmation d'un automate programmable

(30) Priorität: 22.02.1997 DE 19707107
(43) Veröffentlichungstag der Anmeldung: 26.08.1998
(73) Patentinhaber: ROBERT BOSCH GMBH, 70442 Stuttgart (DE)
(72) Erfinder: Reis, Stefan, 63906 Erlenbach (DE); Wolff, Gerhard, 64720 Michelstadt (DE)
(74) Vertreter: Thürer, Andreas

(56) Entgegenhaltungen:
- EP-A- 0 553 621
- EP-A- 0 726 509
- EP-B- 0 444 655
- EP-B- 0 503 256
- DE-A- 3 410 430
- DE-A- 3 530 237
- US-A- 4 302 820
- US-A- 5 295 059

## Beschreibung

### Stand der Technik

Die Erfindung geht aus von einer Einrichtung nach der Gattung des Hauptanspruchs. Programmierbare Steuerungen, z.B. eine SPS, werden mit Hilfe von Programmiereinrichtungen bzw. Programmiergeräten programmiert, wie sie beispielsweise in der Reihe Bibliothek der Technik, Nr. 4, Speicherprogrammierbare Steuerungen, 1987" beschrieben sind. Die Eingabe der Programmanweisungen erfolgt in einer speziell für die Anwendung in einer SPS-bezogenen Darstellung. Übliche Darstellungsformen sind, wie aus Seite 26 ff. ersichtlich, die Anweisungsliste, der Kontaktplan, der Logikplan, der Funktionsplan oder die Ablaufsprache. Alle SPS-anwendungsbezogenen Sprachen haben gemein, daß die einzelnen Programmanweisungen so nacheinander eingegeben werden, wie sie die CPU anschließend abarbeitet. Zur Überführung in ein von der CPU unmittelbar ausführbares Programm muß ein in einer SPS-anwendungsbezogenen Programmiersprache eingegebenes Programm deshalb lediglich durch satzweise Übersetzung von Maschinensprache in ein Anwendungsprogramm umgesetzt werden. Die Programmierung erfolgt in Programmbausteinen, welche jeweils eine oder mehrere technologisch oder funktionell zusammengehörende Programmanweisungen enthalten. Ein vollständiges SPS-Programm setzt sich in der Regel aus mehreren Programmbausteinen zusammen, wobei die einzelnen Bausteine in unterschiedlichen SPS-anwendungsbezogenen Sprachen eingegeben sein können. Üblicherweise kann der Ablauf eines SPS-Programmes auf einem Bildschirm dargestellt und gegebenenfalls geändert werden, etwa durch Entfernen von Programmbausteinen oder Hinzufügen neuer.

In der DE 34 10 430 A1 wird die gemischte Eingabe von G-Code und BASIC-Code offenbart. Es wird vorausgesetzt, dass die beiden Programmiersprachen gemischt, jedoch durch vordefinierte Markierungen getrennt, eingegeben werden. Dies erfordert eine Zusatzeinrichtung, die den gemischten Code vor der Übersetzung zunächst zerlegt, getrennt übersetzt und dann wieder sequentiell zusammenfügt. Es fehlen dem Benutzer bei Inbetriebnahme und Test des Programms Möglichkeiten zur Beeinflussung und Überwachung des Programmablaufes. Außerdem ist diese Form der Eingabe unübersichtlich und damit fehleranfällig.

Die Schrift US-A-4 302 820 zeigt einen Controlter, der neben dem üblichen Maschinencode noch selbst definierte Routinen abarbeiten kann. Die Programmierung über eine Hochsprache wird hier jedoch nicht gezeigt, da die selbst definierten Routinen lediglich die bereits existierende Maschinenbefehle zusammenfassen.

In der Schrift US-A-5 295 059 wird die Programmierung eines Prozessors über Macros beschrieben. Der Begriff Macro deutet jedoch lediglich auf die Zusammenfassung von häufig benötigten und wiederholend verwendeten Befehlsfolgen hin. Macros sind insbesondere in der maschinennahen Programmierung gängige Programmierhilfen. Der Schrift sind keine Hinweise zu entnehmen wie der Prozessor mit Hilfe einer Hochsprache in Verbindung mit einer maschinennahen Sprache programmiert werden kann.

Die Schrift DE 35 30 237 A1 zeigt eine numerische Steuervorrichtung und beschäftigt sich mit der Visualisierung von steuerungsspezifischen Daten.

Die Schrift EP 553 621 A1 beschreibt die Verarbeitung eines NC-Codes mittels eines Compilers, in den über eine Kennung SPS (PLC)-Code eingebunden ist. Der gemischte Code (NC, PLC) ist im Speicher sequentiell abgelegt. Der Compiler sucht diese Kennung im Speicher und wird abhängig von der Kennung aktiv. Hier fehlt generell der Hinweis auf Verwendung einer Hochsprache. Es wird ausschließlich von NC- oder SPS (PLC) - Teileprogrammen gesprochen, die über einen Compiler in ausführbaren Maschinencode überführt werden. Wie jedoch die SPS-Programmierung mit Hilfe einer Hochsprache verbessert werden kann ist der Schrift nicht zu entnehmen.

Die Offenlegungsschrift EP 726 509 beschäftigt sich mit der Eingabe von Steuerdaten über verschiedene Wege: Graphisch oder direkt im G-Code. Nachteil hiervon ist, dass sich der Anwender bei der Programmierung auf maschinennaher Ebene bewegt und er keine Möglichkeit hat seinen erstellten Code effektiv zu testen.

Aus der EP-B 254 352 ist der Vorschlag bekannt, die Programmierung einer numerisch gesteuerten Maschine in einer nicht für diese Anwendung ausgelegten Hochsprache vorzunehmen. Das von einem Bediener eingegebene Programm wird in diesem Fall in einem automatischen Programmabschnitt (Compiler) interpretiert, auf Fehler geprüft und ggf. in ein ausführbares Programm überführt. Bei diesem Verfahren kann die Erstellung eines lauffähigen Programmes allerdings, abhängig von der Aufgabe und der Programmiergeschicklichkeit des Bedieners, schwierig und zeitraubend sein. Häufig führt zudem die Struktur der zu programmierenden Maschine auf maschinenspezifische Problemstellungen, die mit der verwendeten Hochsprache nur unbefriedigend lösbar sind.

Es ist die Aufgabe der Erfindung eine Programmiereinrichtung für eine programmierbare Steuerung anzugeben, die es einem Bediener bei Bedarf ohne weiteres ermöglicht ein Programm aus Programmbausteinen zu bilden, wobei in sich geschlossene Programmbausteine in einer Hochsprache oder in anwendungsbezogener Sprache eingebbar sind.
Weiterhin ist es Aufgabe der Erfindung dem Bediener bei Inbetriebnahme von Programmbausteinen ein Werkzeug an die Hand zu geben, mit dem er den Programmablauf unter Beachtung aller Sicherheitsaspekte beeinflussen kann.

Diese Aufgaben werden erfindungsgemäß dadurch gelöst, dass
- die programmierbare Steuerung eine SPS mit SPS-Betriebssystem (14) ist und ein SPS-Anwendungsprogramm (51 bis 56) verarbeitet;
- Speichermittel (15, 16, 40) zur Ablage von Programmsequenzen, welche in die Hochsprache eingefügten Sonderprogrammanweisungen zugeordnet sind und einen in der Sonderprogrammanweisung jeweils enthaltenen SPS-spezifischen Befehl realisieren;
- einen automatischen Programmierabschnitt (17), welcher in Hochsprache eingegebene Programmanweisungen (33, 35) umsetzt und unter Verwendung der in den Speichermitteln (15, 16, 40) abgespeicherten Programmsequenzen in durch das SPS-Betriebssystem (14) unmittelbar ausführbare Anwendungsprogrammanweisungen (51 bis 56) überführt;
- eine Anzeigevorbereitungseinrichtung (18), welche die Abarbeitung von Anwendungsprogrammanweisungen (53, 55) über eine Ausgabevorrichtung (20) visualisiert und den Bediener in den Programmablauf eingreifen lässt.

Die Erfindung hat den Vorteil, dass die Verarbeitung der in Hochsprache eingegebenen Programmbausteine getrennt von dem steuerungsspezifischen Programmbausteinen erfolgt. Der Speicher (15) gestattet die Zuordnung und den Aufruf SPS-spezifischer Befehle aus der Hochsprache heraus, ohne dass dieser Code in die Hochsprache eingefügt werden muss. Das ermöglicht eine Programmierung, die beispielsweise nur über eine AWL - Codierung möglich wäre. Die Speicher (16,40) gewährleisten Funktionalitäten, die erst während der Programmausführung erforderlich werden.

Die erfindungsgemäße Einrichtung erlaubt eine Programmerstellung unter beliebigem Aneinanderreihen von in SPS-bezogener Sprache und von in Hochsprache programmierten Bausteinen. Der Bediener muß dabei die vertraute SPS-Programmierumgebung nicht verlassen. Zur Uberführung von in Hochsprrache einegegebenen

Programmbausteinen in vom Betriebssystem der SPS unmittelbar ausführbare Anwendungsprogramme können in vorteilhafter Weise handelsübliche Compiler eingesetzt werden. Zweckmäßig umfaßt die Programmiereinrichtung eine Anzeigeeinrichtung, auf welcher der Ablauf eines Programmes visuell darstellbar ist. Bei Darstellung von Programmabläufen, denen ein in Hochsprache eingegebener Programmbaustein zugrunde liegt, nutzt die Anzeigeverarbeitungseinrichtung vorteilhaft Informationen, die der Compiler bei der Umsetzung des Programmbausteines in ein ausführbares Anwendungsprogramm erzeugt.

Ein Ausführungsbeispiel der Erfindung wird nachfolgend unter Bezugnahme auf die Zeichnung näher erläutert.

### Zeichnung

Es zeigen Figur 1 ein Blockdiagramm der vorgeschlagenen Programmiereinrichtung, Figur 2 einen Bildschirmaufbau bei ber Inbetriebnahme eines in SPS-bezogener Sprache eingegebenen Programmbausteins, Figur 3 einen Bildschirmaufbau bei der Inbetriebnahme einen in Hochsprache eingegebenen Bausteins.

### Beschreibung

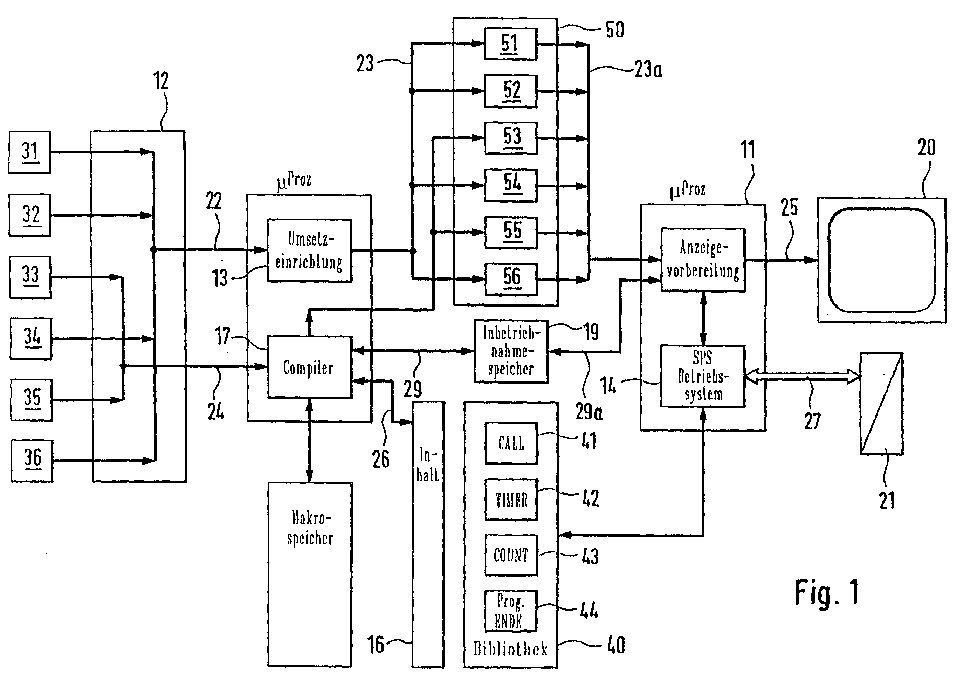

In der Figur bezeichnet das Bezugszeichen 12 eine Eingabevorrichtung zur Eingabe eines Programmes durch einen Bediener. Üblicherweise ist sie als alphanumerisches Tastenfeld ausgeführt, daneben sind andere Eingabetechniken möglich, etwa die Eingabe durch Sprache. Von der Eingabevorrichtung 12 führt eine erste Datenleitung 22 auf eine Umsetzeinrichtung 13, eine zweite Datenleitung 24 auf einen, nachfolgend als (Hochsprachen-)Compiler bezeichneten, automatischen Programmabschnitt 17. Beide Datenleitungen 22, 24 sind zweckmäßig, wie in der Zeichnung angedeutet, jeweils als eigener oder als gemeinsamer Bus realisiert. Die Funktionen der Umsetzeinrichtung 13, bzw. des Compilers 17 können als Betriebsprogramme realisiert sein, die auf einem gemeinsamen Mikroprozessor 10 laufen. Der Umsetzeinrichtung 13 ist über eine weitere, zweckmäßig wiederum als Bus ausgeführte, Datenleitung 23e ein Speicher 50 nachgeschaltet. Der Ausgang des Speichers 50 ist über eine Datenleitung 23a mit einer Anzeigeverarbeitungseinrichtung 18 sowie mit einem SPS-Betriebssystem verbunden.
Mit dem Speicher 50 ist über eine Datenleitung 28 auch der Compiler 17 verbunden. Weiterhin steht der Compiler über eine Datenleitung 29e in Verbindung mit einem Inbetriebnahmespeicher 19, sowie weiterhin über eine Datenleitung 26 mit einem Speicher 16, welcher ein Inhaltsverzeichnis für einen Bibliotheksspeicher 40 bildet. Der Inbetriebnahmespeicher 19 ist ausgangsseitig über eine Datenleitung 29a mit einer Anzeigeverarbeitungseinrichtung 18 verbunden, der über eine Datenverbindung 25 ein Bildschirm 20 nachgeschaltet ist. Die Datenleitung 23a verbindet ferner den Speicher 50 mit dem SPS-Betriebssystem 14. Es dient zur Durchführung eines im Speicher 15 abgelegten Anwendungsprogrammes und ist ausgangsseitig über einen Datenbus 27 mit einer Ein/Ausgangsschnittstelle 21 zu einem zu steuernden Prozeß verbunden. Daneben ist das SPS-Betriebssystem 14 über Datenleitungen mit dem Bibliotheksspeicher 40 sowie mit der Anzeigeverarbeitungseinrichtung 18 verbunden. SPS-Betriebssystem 14 und Anzeigeverarbeitungseinrichtung 18 sind, wie in Figur 1 angedeutet, zweckmäßig jeweils als auf einem einzelnen Mikroprozessor 11 laufende Betriebsprogramme realisiert. Ebenfalls mit der Anzeigeverarbeitungseinrichtung 18 verbunden ist über eine Datenleitung 29a der Inbetriebnahmespeicher 19. Über eine Datenverbindung 25 ist der Anzeigeverarbeitungseinrichtung 18 ferner ein Bildschirm 20 nachgeschaltet.

Nachfolgend wird die Funktion der vorstehend beschriebenen Einrichtung erläutert. Ein SPS-Programm besteht aus einer Folge von einzelnen Programmanweisungen. Jeweils technologisch oder funktionell zusammengehörende Programmanweisungen bilden einen Programmbaustein. Ein vollständiges SPS-Programm enthält typischerweise mehrere solcher Programmbausteine. Die Bausteine können in einer SPS-anwendungsbezogenen Programmiersprache, etwa als Anweisungsliste, als Kontaktplan, als Logikplan, als Funktionsplan oder als Ablaufsprache - oder in einer Hochsprache, etwa der Sprache "C" eingegeben werden. Für das in der Figur dargestellte Beispiel sei angenommen, daß Programmbausteine 31, 32, 34, 36 in einer SPS-anwendungsbezogenen Sprache eingegeben werden, Programmbausteine 33, 35 in einer Hochsprache. Das Programm habe insgesamt sechs Programmbausteine 31 bis 36, die der Bediener der Reihe nach eingebe.

Für die Eingabe der einzelnen Programmbausteine 31 bis 36 aktiviert der Bediener, abhängig davon, ob die Eingabe in SPS-anwendungsspezifischer Sprache oder in Hochsprache erfolgen soll, die nachfolgend SPS-Umsetzer genannte Umsetzeinrichtung 13, bzw. den nachfolgend Compiler genannten Hochsprachencompiler 17. In SPS-anwendungsbezogener Sprache eingegebene Programme werden vom SPS-Umsetzer 13 auf übliche Weise durch einfache, satzweise Übersetzung der Programmanweisungen in vom SPS-Betriebssystem 14 unmittelbar ausführbare Anwendungsprogramme in Maschinencode überführt, welche im Speicher 15 abgelegt werden. Die Überführung der in Hochsprache eingegebenen Programmbausteine in vom SPS-Betriebssystem (14) unmittelbar ausführbare Anwendungsprogramme in Maschinencode erfolgt mit Hilfe von in den Speichern 15, 16 enthaltenen Informationen.

Zur Erleichterung der Eingabe von Programmbausteinen in Hochsprache sind darin Sonderbefehle eingefügt, welche in der Hochsprache nicht vorhandene, für eine SPS-bezogene Sprache typische Befehle nachbilden. So wird der SPStypische Befehl "U E0.0" ("und Eingang 0.0") in der Hochsprache C durch "if (B_E(0,0))", der SPS-Befehl "= A0.1" ("oder Ausgang 0.1") durch "{ B_A(0,1)=1; }" nachgebildet. Den SPS-typischen "BA PB2" ("Bausteinaufruf Programmbaustein 2") bildet in C die Zeile "SPS_BA (2)" nach. "SPS_ " bildet dabei ein Präfix, das einem nachfolgenden, dem SPS-Sprachumfang entlehnten Befehl vorangeht. In der hier zugrundegelegten Hochsprache C haben die in den vorstehenden Befehlsbeispielen verwendeten Adressangaben 0,0, 0,1 keine unmittelbare Bedeutung. Sie entsteht erst in Verbindung mit zugehörigen, im Makrospeicher 15 abgelegten Programmsequenzen. Im Hinblick auf die vorstehend gegebenen Befehlsbeispiele in Verbindung mit der Hochsprache C befinden sich im Makrospeicher 15 beispielsweise Adressierungsprogrammsequenzen, welche den in der Hochsprache verwendeten Adressen, z. B. 0,0 tatsächliche SPS-Adressen zuordnen, z. B. 0.0. Ebenso werden bei Verwendung der Hochsprache C im Makrospeicher 15 beispielsweise die Funktionen der Boole'schen Algebra durch dort abgelegte Programmsequenzen realisiert. Eine Programmsequenz stellt beispielsweise den Zusammenhang zwischen dem SPS-typischen Befehl der Boole'schen Algebra "u" ("und") und der denselben Befehl in der Hochsprache nachbildenden Syntax her, beispielsweise u E1.1" ("und Eingang 1.1") <=> "if (...(1,1))".

Neben unmittelbar ausführbaren Befehlen wie den Befehlen der Boole'schen Algebra oder Adressen beinhaltet eine SPS-bezogene Programmiersprache Befehle, die SPS-spezifische Funktionalitäten realisieren und erst bei der Programmabarbeitung ausgeführt werden. Beispiele für solche Befehle sind der "Timer-", der "Count-", der Programmende- oder der "Bausteinaufruf"- bzw. "Call"-Befehl. Entsprechende Befehle sind in der Syntax der Hochsprache, beispielsweise in C, üblicherweise nicht vorgesehen. Sie werden deshalb durch von der SPS unmittelbar ausführbare Betriebsprogrammodule realisiert, welche als Bibliotheksbausteine 41 bis 44 im Bibliotheksspeicher 40 abgelegt sind. Zu jedem Bibliotheksbaustein ist ferner im Bibliotheksabbildspeicher 16 ein Verweis auf den Bibliotheksspeicher 40 abgelegt, welcher dem in die Hochsprache eingeführten, einen SPS-typischen Befehle nachbildenden Befehl jeweils einen Bibliotheksbaustein 41 bis 44 zuordnet. Beispielsweise ordnet der Bibliotheksabbildspeicher 16 dem in die Hochsprache eingeführten, in deren Syntax nicht vorhandenen Befehl "BA" ("Bausteinaufruf") den Bibliotheksbaustein 41 "Call" zu.

In Hochsprache eingegebene Bausteine 33, 35 werden nach vollständiger Eingabe vom Compiler 17 in vom SPS-Betriebssystem 14 unmittelbar ausführbare Anwendungsprogrammbausteine 53, 55 in Maschinencode überführt, wobei der Compiler auf die im Makrospeicher 15 abgelegten Programmsequenzen sowie auf die im Bibliotheksabbildspeicher 16 abgelegten Bibliotheksverweise zugreift. Erkennt der Compiler 17 im zu kompilierenden Programmbaustein 33, 35 einen SPS-spezifischen, nicht der Hochsprachensyntax zugehörigen Sonderbefehl, sucht er, sofern es sich um einen unmittelbar ausführbaren Befehl handelt, im Makrospeicher 15 nach einer zugehörenden Programmsequenz und bindet sie unmittelbar in den zu kompilierenden Programmbaustein ein. Handelt es sich um eine erst bei Durchführung des Programmes auszuführende Funktionalität, etwa den Befehl "Bausteinaufruf", ermittelt der Compiler 17 mit Hilfe des Bibliotheksabbildspeichers 16 einen Verweis auf den Bibliotheksspeicher 40 und bindet diesen in das ausführbare Programm. Unter Berücksichtigung der Inhalte des Makrospeichers 15 und des Bibliotheksabbildspeichers 16 werden so die in Hochsprache eingegebenen Programmbausteine 33, 35 in ausführbare Anwendungsprogrammbausteine 53, 55 überführt. Sie werden im Speicher 50 entsprechend ihrer Position in der Abfolge des SPS-Programmes abgelegt.

Nachdem die Programmbausteine 31 bis 36 in ausführbare Anwendungsprogrammbausteine 51 bis 56 überführt sind, wird das im Speicher 50 entstandene SPS-Programm in Betrieb genommen. Die Inbetriebnahme wird durch die Anzeigeverarbeitungseinrichtung 18 unterstützt, welche den sich aus dem SPS-Programm ergeben Programmablauf in einem Monitorbetriebsmodus auf dem Bildschirm 20 veranschaulicht. Dargestellt werden zweckmäßig die zugrundeliegende Programmanweisung mit Programmadresse, der Signalzustand der betroffenen Operanden, die resultierenden Verknüpfungsergebnisse sowie die aktuellen Zustände von Zeit- und Zählfunktionen.

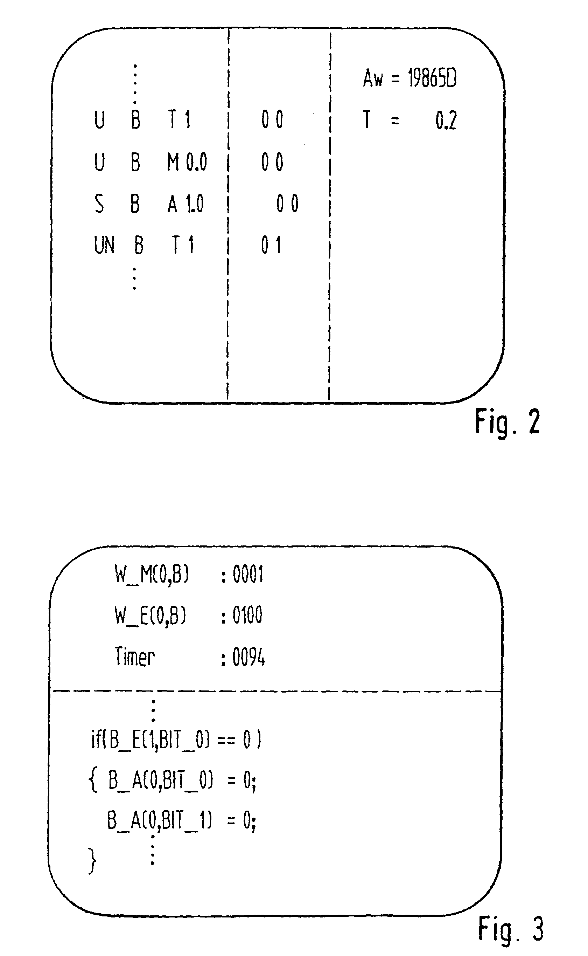

Figur 2 zeigt einen typischen, in drei Spalten geteilten Bildschirmaufbau. In der linken Spalte sind zeilenweise die Programmanweisungen dargestellt, im Beispiel Figur 2 in der obersten Zeile die Anweisung "und Bit Timer 1", in der nächsten Zeile die Anweisung und Bit Merker 0.0", in der nächsten Zeile die Anweisung "Speicher Sit Ausgang 1.0", in der vierten Zeile die Anweisung "und nicht Bit Timer 1". Die mittlere Spalte zeigt die zu den Programmanweisungen gehörenden Verknüpfungsergebnisse, wobei jeweils das adressierte Bit links angegeben ist, das Verknüpfungsergebnis in der Mitte und das Ausgabebit rechts. Im Beispiel Figur 2 hat demnach das adressierte Bit in der ersten wiedergegebenen Programmanweisung den Wert 0, ebenso das Verknüpfungsergebnis. Für die zweite Programmanweisungszeile ergibt sich dasselbe Bild, die dritte Programmanweisungszeile führt auf ein Verknüpfungsergebnis sowie ein Ausgangsbit mit dem Wert 0, die vierte Programmanweisungszeile liefert für das adressierte Bit den Wert 0, als Verknüpfungsergebnis den Wert 1. In der rechten Bildschirmspalte werden ausgewählte Operanden dargestellt, im Beispiel der Inhalt eines Akkus sowie der Zustand einer Zählfunktion T.

Bei der Inbetriebnahme von Programmbausteinen 53, 55, die aus in Hochsprache eingegebenen Bausteinen 33, 35 resultieren, bestehen zusätzliche Darstellungsmöglichkeiten. Die Anzeigeverarbeitungsvorrichtung 18 nutzt dazu Informationen, die beim Kompilieren der Hochsprachenprogrammbausteine durch den Compiler 17 im Inbetriebnahmespeicher 19 angelegt wurden. Zusätzlich zu den für reguläre SPS-Programme bestehenden Monitormöglichkeiten, kann bei Hochsprachenprogrammbausteinen 53, 55 insbesondere eine dynamische Anzeige von Daten, insbesondere von SPS-Operanden, oder ein einmaliges Anzeigen solcher Daten erfolgen. Angezeigt werden können sowohl SPS-Register wie CPU-Register. Anzeigbar sind sowohl einzelne Werte wie der Inhalt ganzer Felder, z. B. Hochsprachen-und SPS-Variablen. Bei der Kompilation im Compiler 17 möglicherweise aufgetretene Fehler werden auf dem Bildschirm 20 z. B. in einem separaten Fenster dargestellt.

Figur 3 zeigt einen typischen Bildschirmaufbau bei der Inbetriebnahme eines in Hochsprache eingegebenen Programmbausteines 53, 55. Er ist horizontal in zwei Bereiche unterteilt, wobei im oberen Bereich vom Benutzer ausgewählte Programmvariablen dargestellt werden. Im Beispiel Figur 3 ist in der erster Zeile die Bit-Struktur des im Merker 0.B befindlichen Wortes wiedergegeben, in der zweiten Zeile die Bit-Struktur des den Eingang 0.B bildenden Wortes und in der dritten Zeile der Wert eines Timers. Die angezeigten Werte werden bei der Inbetriebnahme des Programmbausteines dynamisch verändert oder wahlweise festgehalten. Im unteren Abschnitt des Bildschirmes sind die Programmanweisungen des inbetriebzunehmenden Bausteines wiedergegeben, im Beispiel einer Programmzeile, welche, wenn der Eingang 1.0 den Wert 0 hat, die Ausgänge 0.0 und 0.1 jeweils auf den Wert 0 setzt. Sofern ein abzuarbeitendes SPS-Programm Hochsprachenbausteine 53, 55 enthält, stellt die Anzeigeverarbeitungseinrichtung 18 vor Eintritt in den Monitorbetriebsmodus sicher, daß die Sicherheit des Prozesses ständig gewährleistet ist. Ist in einem Hochsprachenprogrammbaustein beispielsweise ein Unterbrechungspunkt vorgesehen, fordert sie den Bediener in einem automatisch ausgelösten Dialog über den Bildschirm 20 auf, alle Ausgänge bei Einlaufen auf einen Unterbrechungspunkt auf einen sicheren Zustand zu setzen.

## Patentansprüche

1. Einrichtung zum Programmieren einer programmierbaren Steuerung mit
- einem Speicher (50) zur Ablage des Anwendungsprogramms,
- einer Eingabevorrichtung (12) zur Eingabe von Programmanweisungen in einer anwendungsbezogenen Programmiersprache durch einen Bediener,
- einer Übersetzungseinrichtung (13, 17) zur Überführung von Programmanweisungen aus unterschiedlichen Programmiersprachen in unmittelbar ausführbare Anwendungsprogrammanweisungen, **dadurch gekennzeichnet, dass**
- die programmierbare Steuerung eine SPS mit SPS-Betriebssystem (14) ist und ein SPS-Anwendungsprogramm (51 bis 56) verarbeitet,
- Speichermittel (15,16,40) zur Ablage von Programmsequenzen, welche in die Hochsprache eingefügten Sonderprogrammanweisungen zugeordnet sind und einen in der Sonderprogrammanweisung jeweils enthaltenen SPS-spezifischen Befehl realisieren,
- einen automatischen Programmierabschnitt (17), welcher in Hochsprache eingegebene Programmanweisungen (33,35) umsetzt und unter Verwendung der in den Speichermitteln (15,16,40) abgespeicherten Programmsequenzen in durch das SPS-Betriebssystem (14) unmittelbar ausführbare Anwendungsprogrammanweisungen (51 bis 56) überführt,
- eine Anzeigevorbereitungseinrichtung (18), welche die Abarbeitung von Anwendungsprogrammanweisungen (53,55) über eine Ausgabevorrichtung (20) visualisiert und den Bediener in den Programmablauf eingreifen lässt.

2. Einrichtung nach Anspruch 1, **dadurch gekennzeichnet, daß** die in der Hochsprache verwendeten Sonderprogrammanweisungen in Form und Inhalt jeweils einem Befehl in einer SPS-anwendungsbezogenen Programmiersprache nachgebildet sind.

3. Einrichtung nach Anspruch 1, **gekennzeichnet durch** einen Bibliotheksspeicher (40), worin Programmodule (41 bis 44) abgelegt sind, die jeweils einer in der Hochsprache verwendeten Sonderprogrammanweisung eine vom SPS-Betriebssystem (14) bei der Ausführung eines Anwendungsprogrammes unmittelbar ausführbare Anwendungsprogrammsequenz zuordnen, welche eine **durch** die Sonderprogrammanweisung angegebene SPS-spezifische Funktionalität realisiert.

4. Einrichtung nach Anspruch 3, **dadurch gekennzeichnet, daß** dem Bibliotheksspeicher (40) ein Bibliotheksabbildspeicher (16) zugeordnet ist, worin Hinweise auf die Programmodule (41 bis 44) abgelegt sind, welche der automatische Programmierabschnitt (17) bei der Interpretation der Sonderprogrammanweisungen verwendet und in die ausführbaren Anwendungsprogrammanweisungen (53, 55) aufnimmt.

5. Einrichtung nach Anspruch 1, **gekennzeichnet durch** einen Speicher (15) zur Ablage von jeweils einer Sonderprogrammanweisung zugeordneten Programmsquenzen, die jeweils einen in der Sonderprogrammanweisung enthaltenen SPS-spezifischen Befehl realisieren, und anhand derer der automatische Programmierabschnitt (17) bei der Interpretation der Sonderprogrammanweisung eine ausführbare Anwendungsprogrammanweisung erzeugt.

6. Einrichtung nach Anspruch 1, **dadurch gekennzeichnet, daß** der automatische Programmierabschnitt (17) bei der Überführung von in Hochsprache eingegebenen Programmteilen in ein ausführbares Anwendungsprogramm Informationen zur Unterstützung der Inbetriebnahme erzeugt, welche er in einen Inbetriebnahmespeicher (19) einschreibt.

7. Einrichtung nach Anspruch 1, **dadurch gekennzeichnet, dass** die Anzeigevorbereitungseinrichtung (18) bei der Inbetriebnahme eines in Hochsprache eingegebenen Programmbausteins (53,55) auf im Speicher (19) abgelegte Informationen zurückgreift und das Verhalten von SPS-Operanden auf einem Bildschirm (20) dynamisch darstellt.

8. Einrichtung nach Anspruch 7, **dadurch gekennzeichnet, daß** die Anzeigeverarbeitungseinrichtung (18) dazu ausgebildet ist, bei der Inbetriebnahme von in Hochsprache eingegebenen Programmteilen unter Verwendung der im Inbetriebnahmespeicher (19) abgelegten Informationen Unterbrechungspunkte zu setzen und/oder im Speicher (40) abgelegte Programmodule (41 bis 43) und/oder Einzelschritte und/oder Hochsprachenvariablen darzustellen.

## Claims

1. A device for programming a programmable controller, having
- a memory (50) for storing the application program,
- an input device (12) for a user to input program statements in an application-oriented programming language,
- a translation device (13, 17) for converting program statements from different programming languages into directly executable application program statements,
- wherein the programmable controller is a PLC with PLC operating system (14) and processes a PLC application program (51 to 56),
- memory means (15, 16, 40) for storing program sequences that are associated with special program statements inserted in the high-level language and that perform a PLC-specific command respectively contained in the special program statement;
- an automatic control section (17) that converts program statements (33, 35) input in high-level language and, using the program sequences stored in the memory means (15, 16, 40), converts them to application program statements (51 to 56) that may be executed directly by the PLC operating system (14), a display device (18) that displays the processing of application program statements (53, 55) by way of an output device (20) and allows the user to intervene in the program sequence.

2. A device as claimed in claim 1, wherein the special program statements used in the high-level language each emulate a command in a programming language related to a PLC application in form and content.

3. A device as claimed in claim 1, having a library memory (40) in which program modules (41 to 46) are stored, which each allocate to a special program statement used in the high-level language an application program sequence that is directly executable by the PLC operating system (14) when an application program is executed and performs a PLC-specific functionality specified by the special program statement.

4. A device as claimed in claim 3, wherein a library mapping memory (16) is allocated to the library memory (40) and references to the program modules (41 to 44) that the automatic control section (17) uses when interpreting the special program statements and incorporates into the executable application program statements (53, 55) are stored therein.

5. A device as claimed in claim 1, having a memory (15) for storing program sequences each allocated to a respective special program statement and performing a respective PLC-specific command contained in the special program statement, by means of which program sequences the automatic control section (17) creates an.executable application program statement when the special program statement is interpreted.

6. A device as claimed in claim 1, wherein the automatic control section (17) creates information for supporting start-up when program parts input ,in high-level language are converted into an executable application program and writes this information to a start-up memory (19).

7. A device as claimed in claim 1, wherein on start-up of a program module (53, 55) input in high-level language the display device (18) accesses information stored in the memory (19) and dynamically displays the behavior of PLC operands on a screen (20).

8. A device as claimed in claim 7, wherein the display processing device (18) is designed such that on start-up of program parts input in high-level language using information stored in the start-up memory (19) it sets interrupt points and/or displays program modules (41 to 43) stored in the memory (40) and/or individual steps and/or high-level language variables.

## Revendications

1. Système pour programmer une commande programmable avec
- une mémoire (50) pour enregistrer le programme applicatif,
- un dispositif de saisie (12) pour faire entrer, par un opérateur, les instructions du programme dans un langage de programmation spécifique de l'application,
- un dispositif de transmission (13 et 17) pour transformer les instructions du programme provenant de langages de programmation différents en instructions de programme applicatif exécutables immédiatement, **caractérisé par**
- **le fait que** la commande programmable est une commande API avec système d'exploitation API (14) et traite un programme applicatif API (51 à 56),
- par des supports de mémoire (15, 16 et 40) pour enregistrer des séquences de programme qui sont assignées aux instructions de programme spécifiques insérées dans le langage évolué et réalisent une instruction spécifique API contenue dans chaque instruction de programme spécifique,
- par une séquence de programmation automatique (17) qui convertit les instructions de programme (33 et 35) saisies en langage évolué et, en utilisant les séquences de programme mémorisées dans les supports de mémoire (15, 16 et 40), les transforme en instructions du programme applicatif (51 à 56) exécutables immédiatement par le système d'exploitation API (14) ; un dispositif de traitement de la visualisation (18) qui visualise le traitement des instructions du programme applicatif (53 et 55) sur un système d'affichage (20) et permet à l'opérateur d'intervenir dans le déroulement du programme.

2. Système selon la revendication 1 **caractérisé par le fait que** les instructions de programme spécial utilisées en langage évolué sont chaque fois simulées, aussi bien en ce qui concerne la forme que le contenu, par une instruction dans un langage de programmation spécifique de l'application API.

3. Système selon la revendication 1 **caractérisé par** une mémoire bibliothèque (40) où sont enregistrés des modules de programme (41 à 44) qui attribuent à chaque instruction de programme spécial utilisée en langage évolué une séquence de programme applicatif exécutable immédiatement par le système d'exploitation API (14), lors de l'exécution d'un programme appticatif, cette séquence réalisant tes fonctions spécifiques API indiquées par l'instruction de programme spécial.

4. Système selon la revendication 3 **caractérisé par le fait qu'**il est attribué à la mémoire bibliothèque (40) une mémoire de représentation de la bibliothèque (16) dans laquelle sont enregistrées des informations concernant les modules de programme (41 à 44) qu'emploie la séquence de programme automatique (17) pour interpréter les instructions de programme spécial et qui les enregistre dans les instructions de programme applicatif (53 et 55) exécutables.

5. Système selon la revendication 1 **caractérisé par** une mémoire (15) pour enregistrer des séquences de programme chaque fois affectées à une instruction de programme spécial et qui réalisent chacune une instruction spécifique API contenue dans l'instruction de programme spécial et à l'aide desquels la séquence de programmation automatique (17) génère, lors de l'interprétation de l'instruction de programme spécial, une instruction de programme applicatif exécutable.

6. Système selon la revendication 1 **caractérisé par le fait que** la séquence de programmation automatique (17), lors de la transformation en un programme applicatif exécutable des parties du programme entrées en langage évolué, génère des informations pour assister la mise en service qu'il inscrit dans une mémoire de mise en service (19).

7. Système selon la revendication 1 **caractérisé par le fait que** le dispositif de traitement de la visualisation (18) a recours, lors de la mise en service d'un module de programme (53 ou 55) saisi en tangage évolué, à des informations enregistrées dans la mémoire (19) et représente le comportement des opérandes API de façon dynamique sur un écran (20).

8. Système selon la revendication 7 **caractérisé par le fait que** le dispositif de traitement de la visualisation (18) est conformé de telle sorte que, lors de la mise en service de parties du programme saisies en langage évolué, en employant des informations enregistrées dans la mémoire de mise en service (19), il positionne des points d'interruption et/ou représente des modules de programme (41 à 43) enregistrés dans la mémoire (40) et/ou des pas individuels et/ou des variables de langage évolué.
